# EUROPÄISCHE PATENTSCHRIFT

(11) **EP 4 547 456 B1**
(45) Veröffentlichungstag und Bekanntmachung des Hinweises auf die Patenterteilung: **08.04.2026**
(21) Anmeldenummer: 22741704.5
(22) Anmeldetag: 28.06.2022
(51) Int. Cl.: B28B 1/50, B28B 1/54, B28B 7/34, B28B 7/36, B28B 7/46, B28B 11/24, C04B 28/00, C04B 38/02

(54) **ENERGIEAUTARKER REAKTORBEHÄLTER ZUR HERSTELLUNG VON LOW-CARB-BAUPRODUKTEN**
SELF-POWERED REACTOR CONTAINER FOR THE PRODUCTION OF LOW-CARBON BUILDING PRODUCTS
CONTENANT DE RÉACTEUR AUTO-ALIMENTÉ POUR LA PRODUCTION DE PRODUITS DE CONSTRUCTION À FAIBLE TENEUR EN CARBONE

(43) Veröffentlichungstag der Anmeldung: 07.05.2025
(73) Patentinhaber: Aolox GmbH, 4690 Schwanenstadt (AT)
(72) Erfinder: STERRER, Petra, 4863 Seewalchen (AT); STERRER, Manfred, 4863 Seewalchen (AT)
(74) Vertreter: SONN Patentanwälte GmbH & Co KG
(86) Internationale Anmeldenummer: PCT/EP2022/067692
(87) Internationale Veröffentlichungsnummer: WO 2024/002465

(56) Entgegenhaltungen:
- EP-A1- 0 677 363
- EP-A1- 0 677 363
- CN-U- 206 748 680
- CN-U- 206 748 680
- CN-U- 211 104 613
- CN-U- 211 104 613

## Beschreibung

Die vorliegende Erfindung betrifft einen Reaktionsbehälter zur Herstellung eines porösen Geopolymers, das als nachhaltiges Baumaterial eingesetzt werden kann.

Geopolymere (auch bezeichnet als alkaliaktivierte Materialien bzw. alkaliaktivierte Stoffe) sind anorganische Polymere, die bei einem hohen pH-Wert von etwa 13-14 durch Polykondensation gebildet werden. Durch Laugen, etwa Natrium- oder Kaliumhydroxid, werden Aluminium- und Siliziumoxide zunächst aktiviert und gespalten. Anschließend wird ein dreidimensionales Netzwerk gebildet, d.h. ein Geopolymer, das überwiegend aus Silizium- und Aluminiumtetraedern besteht. Geopolymere weisen vorteilhafte physikalische Eigenschaften auf, beispielsweise eine einfache und schnelle Formgebung, gute Bindeeigenschaften, beliebige Beeinflussung von Produkteigenschaften durch Zuschlagstoffe, und hohe chemische und thermische Beständigkeit. Aufgrund dessen sind Geopolymere, insbesondere geschäumte, poröse Geopolymere, eine vielversprechende Alternative zu herkömmlichen Baustoffen.

Bei im Stand der Technik üblichen Verfahren erfolgt die Herstellung von Geopolymeren in einem mehrstufigen Verfahren. Dabei kann es zu Trocknungsschrumpf kommen, was in weiterer Folge zu Spannungsrissen führen kann. DE 102015121553 A1 beschreibt beispielsweise ein Verfahren zur Herstellung von Porenbeton, wobei eine gießfähige, wässrige Mischung aus einer hydrothermal reagierenden Calciumoxid-Komponente und einer hydrothermal reagierenden Siliziumdioxid-Komponente mit einem porenbildenden Treibmittel und/oder einem Schaum vermischt und in eine Form gegossen werden, in der die Mischung auftreibt. In einem Autoklav erfolgt daraufhin eine hydrothermale Härtung.

Um Porenbeton herzustellen, kann etwa eine Dampfhärtung im Autoklav bei 170-200 °C für 14-18 h und einem Druck von bis zu 10 bar durchgeführt werden. Dieses Verfahren ist sehr energieintensiv, es werden rund 2000 MJ/m³ benötigt. Damit einher geht ein erhebliches globales Erwärmungspotential (GWP) von ca. 200 kg CO₂-Äquivalent/m³. Im Stand der Technik werden weiters üblicherweise kaum Rezyklate zur Herstellung von Geopolymeren eingesetzt, was nachteilig hinsichtlich der Ressourcenschonung und Nachhaltigkeit ist. Auch ist die Herstellung poröser Geopolymer aufwändig, da die Aushärtung und Einbringung von Poren normalerweise in separaten Verfahrensschritten erfolgen.

Weitere Verfahren zur Herstellung von Porenbeton oder Gasbeton sind bekannt aus CN 211 104 613 U, EP 0 677 363 A1 und CN 206 748 680 U, wobei CN 211 104 613 U einen Reaktionsbehälter umfassend einen Außenbehälter mit einem Boden, ein Druckventil, einen Zwischenraum und einen Deckel zum hermetischen Verschließen des Außenbehälters offenbart, und wobei das Druckventil eingerichtet ist, Druck und Wasserdampf aus dem Zwischenraum abzuführen.

Es ist daher eine Aufgabe der gegenständlichen Erfindung, einen Reaktionsbehälter bereitzustellen, mit welchem aus einem Ausgangsstoff, der Rezyklat umfasst, in nur einem Schritt und durch ein ressourcenschonendes, energieeffizientes Verfahren ein poröses Geopolymer hergestellt werden kann, wobei Trocknungsschrumpf und damit einhergehende Spannungsrissbildung vermieden werden, sodass ein poröses Geopolymer mit hoher Festigkeit, homogener Porenstruktur (insbesondere Porenverteilung und Porengröße) sowie geringem Restfeuchtegehalt erhalten wird, das als nachhaltiges Baumaterial verwendet werden kann.

Diese Aufgabe wird erfindungsgemäß durch einen Reaktionsbehälter und ein Verfahren gemäß den Ansprüchen gelöst.

In der vorliegenden Erfindung wird unter einem Geopolymer - genannt auch "alkaliaktiviertes Material" bzw. "alkaliaktivierter Stoff" - ein anorganisches Polymer verstanden, das aus einem Ausgangsmaterial, welches Siliziumdioxid und Aluminiumoxid beinhaltet, durch Spaltungsreaktionen und eine Polykondensationsreaktion gebildet werden kann.

Der erfindungsgemäße Reaktionsbehälter umfasst einen Außenbehälter mit einem Boden, einen Innenbehälter mit einem Boden, einen Distanzhalter, ein Druckventil, einen durch den Distanzhalter zwischen Außenbehälter und Innenbehälter ausgebildeten Zwischenraum und einen Deckel zum hermetischen Verschließen des Außenbehälters und des Innenbehälters, wobei der Boden des Innenbehälters diffusionsoffen ist und eine Barriere für Flüssigkeiten bildet, und wobei das Druckventil eingerichtet ist, Druck und Wasserdampf aus dem Zwischenraum abzuführen.

Der Distanzhalter gemäß der vorliegenden Erfindung kann normal zur Strömungsrichtung angeordnet sein und eine Ausnehmung in Strömungsrichtung des Wasserdampfs aufweisen. Für eine gute Balance zwischen hoher Steifigkeit und möglichst geringem Widerstand für Wasserdampf kann der Distanzhalter eine große, vorzugsweise mittig angeordnete Ausnehmung aufweisen. Alternativ kann der Distanzhalter auch mehrere kleinere Ausnehmungen aufweisen. Mit dem Außenbehälter und dem Innenbehälter kann der Distanzhalter form- und/oder kraftschlüssig verbunden sein, etwa durch Verklemmung oder Verschraubung, sodass ein Verzug des Distanzhalters durch eine darauf einwirkende Druckkraft vermieden wird. Bevorzugt weist der Reaktionsbehälter mindestens vier, besonders bevorzugt mindestens acht Distanzhalter auf. Diese können im Zwischenraum zwischen einer Seitenwand des Innenbehälters und einer Seitenwand des Außenbehälters angeordnet sein, und/oder zwischen dem Boden des Innenbehälters und einem Boden des Außenbehälters. Dadurch kann eine hohe Steifigkeit des Innenbehälters und des Außenbehälters erreicht werden, sodass eine druckbedingte Verformung vermieden oder zumindest verringert werden kann. Anstelle einzelner Distanzhalter kann beispielsweise auch eine Distanzhalterschiene vorgesehen sein, die vorzugsweise gelocht ist.

Der erfindungsgemäße Distanzhalter kann auch als Leitblech ausgebildet sein, um den Strömungswiderstand für Wasserdampf im Zwischenraum zu erhöhen, sodass dessen Verweilzeit im Zwischenraum verlängert wird. Da der Wasserdampf als Wärmeträgermedium fungieren kann, kann dies die Abkühlgeschwindigkeit einer im Innenbehälter vorhandenen Mischung reduzieren. Das Leitblech kann schräg zur Strömungsrichtung angeordnet sein, z.B. in einem Winkel von 45° bis 60°.

In einer bevorzugten Ausführungsform ist der Boden des Innenbehälters perforiert. Dies ermöglicht eine einfache Handhabung, insbesondere eine leichte Reinigung. Beispielsweise kann der Boden des Innenbehälters als Lochblech ausgebildet sein, sodass ausreichende Temperatur- und Druckstabilität gegeben ist. Die Perforierung kann 10 bis 75% der Bodenfläche umfassen. Vorzugsweise umfasst die Perforierung 30 bis 60% der Bodenfläche, um eine leichte Diffusion von Wasserdampf zu ermöglichen. Der Durchmesser im perforierten Boden vorgesehener Löcher liegt vorzugsweise im Bereich von 1,5 bis 40 mm, vorzugsweise im Bereich von 3 bis 8 mm. Auch hierdurch wird die Diffusion von Wasserdampf durch den perforierten Boden erleichtert. Zugleich stellt der perforierte Boden eine gute Barriere für Flüssigkeiten dar. Unter einer Flüssigkeit wird dabei eine fließfähige Substanz (bzw. Mischung, Komponente) verstanden, etwa eine hochviskose, pastöse Mischung oder Wasser. Zwar kann es beim Befüllen des Innenbehälters mit einer Mischung, aus der das poröse Geopolymer hergestellt wird, je nach Lochgröße zum Hindurchfließen eines geringen Teils der noch fließfähigen Mischung durch den perforierten Boden kommen. Allerdings ist dieser Materialverlust vernachlässigbar. Die Löcher des perforierten Bodens können durch diese Mischung verschlossen werden, wodurch ein diffusionsoffener Boden, der eine Barriere für Flüssigkeiten bildet, entsteht. Dies verhindert ein weiteres Hindurchfließen der Mischung, bzw. kommt es mit fortschreitender Reaktion während der Herstellung des porösen Geopolymers zu einer Verfestigung der Mischung, sodass diese unter den Bedingungen im Innenbehälter (insbesondere Druck und Temperatur) ohnehin nicht mehr fließfähig ist. Alternativ zu einem perforierten Boden kann auch ein gitterförmiger Boden vorgesehen sein, wobei Ausnehmungen 10 bis 75% der gitterförmigen Bodenfläche umfassen können, vorzugsweise 30 bis 60%. Weiters kann jede Ausnehmung eine Seitenlänge im Bereich von 1,5 bis 40 mm, vorzugsweise 3 bis 8 mm aufweisen.

Weiters ist es erfindungsgemäß bevorzugt, wenn der Boden des Innenbehälters mit einem Vlies oder mit einer Membran bedeckt ist, wenn der Boden perforiert ist. Dadurch werden Wasser bzw. eine nach dem Einfüllen noch fließfähige Mischung daran gehindert, zum Boden des Innenbehälters zu gelangen, sodass ein Hindurchfließen in den Zwischenraum vermieden werden kann. In einer bevorzugten Ausführungsform ist der Boden des Innenbehälters mit einem Glasvlies oder Basaltvlies bedeckt, da hierdurch eine optimale Barrierewirkung für Wasser bei gleichzeitiger Durchlässigkeit von Wasserdampf gegeben ist. In einer alternativen, bevorzugten Ausführungsform ist der Boden des Innenbehälters mit einer Membran bestehend aus gerecktem Polyethylenterephthalat (PTFE) bedeckt. Auch hiermit ist eine gute Wasserdampfdurchlässigkeit bei gleichzeitiger Barrierewirkung für Wasser gegeben. Sowohl ein Glasvlies oder Basaltvlies als auch eine Membran aus PTFE weisen weiters eine gute Temperaturbeständigkeit auf, sodass deren erfindungsgemäßer Einsatz im Innenbehälter zu keiner thermischen Alterung und damit einhergehender Beeinträchtigung der Barriereeigenschaften und der Qualität des porösen Geopolymers führt. Alternativ kann auch eine Fritte, insbesondere eine Glasfritte, verwendet werden.

Wird bei Verwendung des Reaktionsbehälters gemäß der vorliegenden Erfindung kein Vlies oder keine Membran vorgesehen, um den ggf. perforierten bzw. gitterförmigen Boden des Innenbehälters zu bedecken, kann es beim Befüllen des Reaktionsbehälters zu einem Hindurchfließen eines geringen Teils der noch fließfähigen Mischung durch den perforierten Boden des Innenbehälters kommen, was zu einem Verschluss der Löcher führen kann. Dadurch kann sich eine diffusionsoffene Schicht, die eine Barriere für Flüssigkeiten darstellt, ausbilden, sodass in weiterer Folge (d.h. bei mehreren aufeinanderfolgenden Befüllvorgängen) auch bei Verzicht auf ein Vlies oder eine Membran der Boden des Innenbehälters aufgrund dieser Schicht schon beim erneuten Befüllen des Reaktionsbehälters eine gute Barriere für Flüssigkeiten darstellt und diffusionsoffen ist.

Gemäß einer bevorzugten Ausführungsform der vorliegenden Erfindung ist ein an den Boden des Innenbehälters anschließender Abschnitt einer Seitenwand des Innenbehälters (wie auch der Boden des Innenbehälters) diffusionsoffen und bildet eine Barriere für Flüssigkeiten. Dies ermöglicht die Diffusion von Wasserdampf sowohl durch den Boden als auch durch diesen Abschnitt in der Seitenwand aus dem Innenbehälter in den Zwischenraum. Insbesondere bei großvolumigen Reaktionsbehältern ist diese Ausführungsform vorteilhaft, um eine gleichmäßige Feuchtigkeitsverteilung in der Mischung sicherzustellen. Unter einer Seitenwand wird dabei etwa die Mantelfläche eines zylindrischen Innenbehälters verstanden, oder die Seitenwand eines rechteckigen Innenbehälters. Bevorzugt ist, wenn dieser Abschnitt ein Drittel einer Höhe der Seitenwand umfasst, besonders bevorzugt zwei Drittel. Auch kann der Abschnitt die gesamte Seitenwand umfassen. Dadurch wird eine effiziente Diffusion von Wasserdampf durch die Seitenwand ermöglicht. In der vorliegenden Erfindung ist es weiters bevorzugt, wenn der an den Boden des Innenbehälters anschließende Abschnitt der Seitenwand des Innenbehälters perforiert ist und dieser Abschnitt mit einem Vlies oder mit einer Membran bedeckt ist. Auch hierbei handelt es sich vorzugsweise um ein Glasvlies oder um eine Membran, die aus gerecktem Polyethylenterephthalat (PTFE) besteht. Die Perforierung umfasst vorzugsweise 10 bis 75%, bevorzugter 30 bis 60% des Abschnitts, um eine leichte Diffusion von Wasserdampf zu ermöglichen. Der Durchmesser im perforierten Abschnitt vorgesehener Löcher liegt vorzugsweise im Bereich von 1,5 µm bis 40 mm, vorzugsweise im Bereich von 3 bis 8 mm. Auch hierdurch wird die Diffusion von Wasserdampf erleichtert. Für eine über den Umfang homogene Feuchtigkeitsverteilung ist es bei einem Innenbehälter mit mehreren Seitenwänden, etwa einem rechteckigen Innenbehälter, bevorzugt, wenn an den Boden des Innenbehälters anschließende Abschnitte aller Seitenwände des Innenbehälters so ausgebildet sind, dass Wasserdampf aus dem Innenbehälter durch die Seitenwände in den Zwischenraum diffundieren kann und diese Abschnitte der Seitenwände zugleich eine Diffusionsbarriere für Wasser bilden. Alternativ zu einem perforierten Abschnitt kann auch ein gitterförmiger Abschnitt der Seitenwand vorgesehen sein, wobei Ausnehmungen 10 bis 75% des gitterförmigen Abschnitts umfassen können, vorzugsweise 30 bis 60%. Weiters kann jede Ausnehmung eine Seitenlänge im Bereich von 1,5 bis 40 mm, vorzugsweise 3 bis 8 mm aufweisen.

In einer bevorzugten Ausführungsform der vorliegenden Erfindung ist ein Bodenbereich des Zwischenraums so ausgebildet, dass er 10 bis 95 Gew%, vorzugsweise mindestens 70 Gew%, einer im Innenbehälter vorhandenen Menge an Wasser aufnehmen kann. Dabei ist der Bodenbereich als Raum zwischen dem Boden des Außenbehälters und einer mit dem Boden des Innenbehälters zusammenfallenden Ebene definiert. Da der Innenbehälter während der Herstellung des porösen Geopolymers eine höhere Temperatur aufweisen kann als der ihn umgebende Zwischenraum, kann es im Zwischenraum zur teilweisen Kondensation des durch den Boden des Innenbehälters diffundierten Wasserdampfs kommen. Kondensiertes Wasser kann sich dann im Zwischenraum am Boden des Außenbehälters ansammeln. Durch diese bevorzugte Ausführungsform wird sichergestellt, dass in den Zwischenraum diffundierter Wasserdampf während der gesamten Herstellung des porösen Geopolymers zum Druckventil gelangen kann, selbst wenn es zu einer teilweisen Kondensation dieses Wasserdampfs im Zwischenraum kommt. Um den Bodenbereich zu vergrößern, ohne den Abstand zwischen dem Boden des Innenbehälters und dem Boden des Außenbehälters über die gesamte Querschnittfläche vergrößern zu müssen, können im Boden des Außenbehälters auch eine oder mehrere Vertiefungen vorgesehen sein, in denen sich Wasser ansammeln kann. Dadurch kann eine zu starke Ausdehnung von Wasserdampf und damit einhergehende Abkühlung (ggf. sogar Kondensation) vermieden werden.

Der erfindungsgemäße Reaktionsbehälter weist ein Druckventil auf, durch welches Druck und in den Zwischenraum diffundierter Wasserdampf aus dem Reaktionsbehälter abgeführt werden können. Das Druckventil ermöglicht es, Druck und Wasserdampf kontrolliert abzuführen. Somit kann sichergestellt werden, dass während einer zur Ausbildung des porösen Geopolymers erforderlichen Polykondensationsreaktion (d.h. Aushärtung) freigesetztes Wasser gänzlich im Innenbehälter verbleibt und die geschäumte Mischung nicht vorzeitig abtrocknet. Ansonsten könnte die Polykondensationsreaktion durch Verschieben des Reaktionsgleichgewichts ganz oder teilweise unterbrochen werden, was in weiterer Folge zu einem Festigkeitsverlust im herzustellenden porösen Geopolymer führen würde. Insbesondere kann erfindungsgemäß während der Polykondensationsreaktion ein Feuchtegleichgewicht in einem Luftraum zwischen dem Deckel und der geschäumten Mischung (d.h. dem sich ausbildenden porösen Geopolymer) im Innenbehälter hergestellt werden. Dabei werden im gleichen Zeitraum gleich viele Wassermoleküle durch die geschäumte Mischung aufgenommen, wie aus der geschäumten Mischung verdampfen. Durch die erfindungsgemäße Abführung des Wasserdampfs können weiters sowohl der Kern als auch die Randzonen der geschäumten Mischung gleichmäßig mit Wärme und Feuchtigkeit versorgt werden. Dies ermöglicht es, gleichmäßige Bedingungen für die Polykondensationsreaktion über den gesamten Querschnitt und die gesamte Höhe des Innenbehälters sicherzustellen, sodass ein poröses Geopolymer mit homogenen Eigenschaften, vor allem homogener Festigkeit und Porenstruktur (insbesondere Porengröße, Porenverteilung) erhalten werden kann.

Vorzugsweise öffnet sich das Druckventil erfindungsgemäß bei einem vorbestimmten Wert des Drucks im Innenbehälter und bleibt dann geöffnet. Dies ermöglicht es, durch Abführen von Wasserdampf das im Innenbehälter ausgebildete poröse Geopolymer zu trocknen. Das Druckventil bleibt erfindungsgemäß auch dann geöffnet, wenn der Druck im Innenbehälter während der Abtrocknung wieder unter den vorbestimmten Wert abfällt, da sonst keine ausreichende Abtrocknung erreicht werden würde. Es ist beispielsweise auch möglich, Wasserdampf erst nach einer vorbestimmten Zeit abzuführen, nachdem der Druck im Innenbehälter den vorbestimmten Wert erreicht hat, z.B. nach 3 min oder nach 5 min nach Erreichen des vorbestimmten Werts. Damit kann der Aushärtungsgrad (d.h. Vernetzungsgrad) des porösen Geopolymers und damit einhergehend dessen Festigkeit weiter gesteigert werden.

Der vorbestimmte Wert des Drucks im Innenbehälter, bei welchem sich das Druckventil öffnet und dann geöffnet bleibt, kann erfindungsgemäß mindestens 1180 mbar, bevorzugter mindestens 1500 mbar, noch bevorzugter mindestens 1800 mbar, besonders bevorzugt mindestens 2000 mbar sein. Der Umgebungsdruck (d.h. atmosphärischer Druck) kann dabei 1013 mbar betragen. Ein Druckanstieg im Innenbehälter bis zu diesem Wert weist auf eine hohe Wasserdampfkonzentration im Innenbehälter und damit einhergehend auf ein Ende der Polykondensationsreaktion hin. Ein solcher Druckanstieg kann daher als Indikator herangezogen werden, um durch Öffnen des Druckventils eine kontrollierte, gleichmäßige Abtrocknung des porösen Geopolymers einzuleiten. Dadurch können Spannungsrissbildungen (aufgrund Spannungsdifferenzen zwischen dem Kern und der Randzone des Geopolymers, die andernfalls wegen inhomogener Abtrocknung entstehen würden) sowie Deformation oder Zerstörung der gebildeten Poren vermieden werden.

Alternativ kann sich das Druckventil gemäß der vorliegenden Erfindung auch öffnen und geöffnet bleiben, sobald die Temperatur im Innenbehälter auf einen vorbestimmten Wert unterhalb einer während der Herstellung des porösen Geopolymers maximal auftretenden Temperatur im Innenbehälter abfällt. Dieser vorbestimmte Wert liegt vorzugsweise bei 5 °C, bevorzugter bei 10 °C. Unter der maximal auftretenden Temperatur wird die Temperatur verstanden, die während der Herstellung des porösen Geopolymers im Innenbehälter maximal erreicht wird (aufgrund von durch exotherme Reaktionen freigesetzter Wärme, und ggf. zusätzlicher externer Energiezufuhr). Ein Temperaturabfall bis zu dem vorbestimmten Wert weist auf ein Ende der Polykondensationsreaktion hin und kann ebenfalls als Indikator herangezogen werden, um durch Öffnen des Druckventils eine kontrollierte, gleichmäßige Abtrocknung des porösen Geopolymers einzuleiten.

Gemäß einer bevorzugten Ausführungsform ist das Druckventil in einem den Zwischenraum begrenzenden Bereich des Deckels oder in einem an den Deckel unmittelbar anschließenden Abschnitt einer Seitenwand des Außenbehälters vorgesehen. Durch diese Anordnung kann sichergestellt werden, dass der aus dem Innenbehälter in den Zwischenraum diffundierte Wasserdampf nicht nur z.B. an einer Außenseite des Bodens des Innenbehälters, sondern auch an einer Außenseite einer Seitenwand des Innenbehälters entlangströmt, bevor er über das Druckventil aus dem Reaktionsbehälter abgeführt wird. Der Wasserdampf fungiert somit als Wärmeträgermedium und trägt (zusätzlich zur durch exotherme Reaktionen im Innenbehälter freigesetzten Wärme) zur weiteren Erwärmung der Mischung bei, bzw. verlangsamt deren Abkühlung nach Beendigung der Polykondensationsreaktionen, sodass die nachfolgende Abtrocknung effizienter erfolgen kann. Auch kann einer etwaigen, frühzeitigen Kondensation von Wasserdampf im Innenbehälter entgegengewirkt werden. Der an den Deckel unmittelbar anschließende Abschnitt einer Seitenwand des Außenbehälters umfasst vorzugsweise ein Fünftel der Höhe der Seitenwand.

Weiters ist es erfindungsgemäß bevorzugt, wenn der Reaktionsbehälter zumindest zwei Druckventile umfasst, vorzugsweise vier. Dies ermöglicht eine bessere Kontrolle der Abführung von Wasserdampf. So können etwa anstelle eines Druckventils mit einem vergleichsweise hohen Volumenstrom zwei Druckventile mit kleinerem Volumenstrom eingesetzt werden, sodass eine feinere Justierung des Volumenstroms möglich ist. Vorzugsweise sind die Druckventile gleichmäßig über den Umfang des Zwischenraums angeordnet, sodass eine gleichmäßige Abführung von Wasserdampf erfolgen kann. Besonders bevorzugt sind vier Druckventile in einem den Zwischenraum begrenzenden Bereich des Deckels gleichmäßig über den Umfang des Zwischenraums verteilt angeordnet, um eine besonders gleichmäßige Abführung von Wasserdampf zu erreichen. Zusätzlich dazu können vier weitere Druckventile in einem an den Deckel unmittelbar anschließenden Abschnitt einer Seitenwand des Außenbehälters angeordnet sein (z.B. in einem an den Deckel unmittelbar anschließenden Fünftel der Höhe der Seitenwand; etwa in den eckennahen Bereichen eines rechteckigen Reaktionsbehälters), wobei die vier weiteren Druckventile vorzugsweise gleichmäßig über den Umfang des Zwischenraums verteilt sind.

Gemäß einer bevorzugten Ausführungsform beinhalten der Außenbehälter und der Deckel eine Wärmeisolierung. Hierdurch kann die Abkühlung der Mischung verlangsamt werden, sodass durch exotherme Reaktionen im Innenbehälter freigesetzte Wärme besser genutzt werden kann. Die Wärmeisolierung kann einen geschäumten Kunststoff (z.B. Polystyrol, Polyurethan), einen anorganischen Dämmstoff (z.B. Mineralwolle (etwa Glas- oder Steinwolle), Glasschaum, Perlit, Kalziumsilikat), Vakuumpaneele, einen Naturdämmstoff (z.B. Holzwolle, Hanffasern, Kork, Schilf), oder ein Recyclingmaterial (z.B. Altpapier) umfassen.

Die vorliegende Erfindung betrifft auch ein Verfahren zur Herstellung eines porösen Geopolymers, umfassend die Schritte:
(a) Bereitstellen des Reaktionsbehälters gemäß der vorliegenden Erfindung,
(b) Befüllen des Innenbehälters mit einer Mischung umfassend zerkleinertes Rezyklat, einen alkalischen Aktivator, Treibmittel und Wasser, wobei das Rezyklat Siliziumdioxid und Aluminiumoxid beinhaltet,
(c) Schäumen der Mischung bis zu einer maximalen Schaumhöhe, und hermetisches Verschließen des Innenbehälters und des Außenbehälters mit dem Deckel,
(d) Initiieren von exothermen Spaltungsreaktionen amorpher Bestandteile des Rezyklats mit dem alkalischen Aktivator, und Aufheizen der Mischung auf eine Temperatur im Bereich von 70 bis 100 °C, vorzugsweise 75 bis 85 °C, durch die Spaltungsreaktionen,
(e) Ausbilden des porösen Geopolymers durch weitere Spaltungsreaktionen und eine Polykondensationsreaktion unter Freisetzung von Wasserdampf,
(f) Abtrocknen des porösen Geopolymers durch Abführen des freigesetzten Wasserdampfs in den Zwischenraum und über das Druckventil aus dem Reaktionsbehälter, und
(g) Entformen des porösen Geopolymers.

Erfindungsgemäß wird ein Ausgangsstoff, der zerkleinertes Rezyklat umfasst, mit einer Lösung eines alkalischen Aktivators in Wasser, einem Treibmittel, sowie ggf. einem Additiv und/oder einem Füllstoff gemischt. Eine diese Bestandteile umfassende Mischung wird anschließend in den Innenbehälter des Reaktionsbehälters eingefüllt. Der Innenbehälter kann eine Füllkapazität von 0,5 bis 10.000 Liter haben. Vor Einfüllen der Mischung in den Innenbehälter kann dieser mit Trennmittel beschichtet werden, um eine nachfolgende Entformung des porösen Geopolymers zu erleichtern.

Verschiedene Rezyklate können erfindungsgemäß zum Einsatz kommen, beispielsweise Verbrennungsrückstände aus Wärmekraftwerken oder Müllverbrennungsanlagen, Flugasche, Schlacke (z.B. aus metallurgischen Prozessen), Minenabfälle aus dem Bergbau oder der Eisenverhüttung, Mineral- und Glasfaserabfälle, Altglas, Steinwolle, keramischer Schleifstaub, Gießereisand und mineralische Abfälle bzw. Nebenabfälle aus der Industrie oder dem Gebäuderückbau. Bevorzugt werden in der vorliegenden Erfindung mineralische Abfälle eingesetzt, da ihr Anteil an Erdalkalimetallen vergleichsweise hoch ist. Das Zerkleinern des Rezyklat kann beispielsweise durch Vermahlung erfolgen, sodass ein pulverförmiges Rezyklat erhalten wird. Das Rezyklat beinhaltet erfindungsgemäß amorphe Anteile von Siliziumdioxid und amorphe Anteile von Aluminiumoxid. Vorzugsweise werden Rezyklate mit einem Anteil amorpher Komponenten von 5 bis 95 Gew% eingesetzt. Im Rezyklat kann der Anteil an Siliziumdioxid im Bereich von 5 bis 99 Gew% liegen, und der Anteil an Aluminiumoxid kann im Bereich von 5 bis 95 Gew% liegen (jeweils bezogen auf das Gewicht des Rezyklats). In der Mischung kann der Anteil an Siliziumdioxid dann im Bereich von 5 bis 70 Gew% liegen, während der Anteil an Aluminiumoxid im Bereich von 2,5 bis 35 Gew% liegen kann (jeweils bezogen auf das Gesamtgewicht der Mischung). Das Verhältnis von Siliziumdioxid zu Aluminiumoxid hat maßgeblichen Einfluss auf die Qualität des erhaltenen Geopolymers. Bevorzugt liegt das Verhältnis von Siliziumdioxid zu Aluminiumoxid im Rezyklat im Bereich von 15:8 bis 60:30 (Angaben in Gew%). Hierdurch wird ein Geopolymer mit besonders hoher Festigkeit, insbesondere Druckfestigkeit, erhalten. Weiters bevorzugt weist das Rezyklat einen Gesamtgehalt an Siliziumoxid und Aluminiumoxid im Bereich von 25 bis 75 Gew% auf, sodass ein Geopolymer mit hoher Homogenität gebildet werden kann. Darüber hinaus können noch weitere Bestandteile, etwa Phosphorpentoxid, Bortrioxid, Eisen(III)-oxid, Calciumoxid, Magnesiumoxid oder Mischungen davon, im Rezyklat vorhanden sein, insbesondere zur Verbesserung bestimmter Eigenschaften des porösen Geopolymers (z.B. verbesserte Flammeigenschaften in Anwesenheit von Bortrioxid). Weitere Bestandteile können auch als Fremdstoffe vorhanden sein, die zwar in das Geopolymer eingebaut werden können, aber die Homogenität und Eigenschaften des Geopolymers nicht wesentlich beeinflussen.

Als alkalischer Aktivator kann in der vorliegenden Erfindung ein wasserlösliches Alkalimetallhydroxid, ein Alkalimetallsilikat, ein Alkalicarbonat, ein Alkalimetallaluminat oder eine Mischung davon verwendet werden, oder Natrium- oder Kaliumhydroxid. Der alkalische Aktivator kann Spaltungsreaktionen im Reaktionsbehälter zur Herstellung eines Geopolymers bei einem hohen pH-Wert, insbesondere im Bereich von 13 bis 14, initiieren. Erfindungsgemäß wird bevorzugt eine Natriumlauge als alkalischer Aktivator eingesetzt, weil sie eine aktivere (d.h. besonders effektive) Spaltungsreaktion bewirkt, sodass ein geringerer Gesamtalkalianteil erforderlich ist. Auch sind Natriumlaugen wirtschaftlich günstig am Markt erhältlich. Bevorzugt liegt die Konzentration des alkalischen Aktivators in einer wässrigen Lösung im Bereich von 5 bis 15 Gew%, da hiermit eine effiziente Reaktion mit dem Rezyklat erfolgen kann. Auch ein Co-Aktivator kann der Mischung zugegeben werden, um die Reaktion weiter zu beschleunigen, beispielsweise eine anorganische Säure, eine Hydroxycarbonsäure, ein Triethanolamin oder eine Mischung davon.

Erfindungsgemäß wird auch ein Treibmittel zugesetzt, um die Geschwindigkeit der Porenbildung und die Porenanzahl in der Mischung zu erhöhen. Bevorzugt kommt Wasserstoffperoxid als Treibmittel zum Einsatz, da dessen Zerfallsprodukte Wasser und Sauerstoff sind, wobei Sauerstoff als effizientes Treibmittel wirkt und Wasser ohnehin in der Mischung vorhanden ist. Somit können unerwünschte Nebenprodukte, wie sie beim Zerfall anderer Peroxide entstehen, vermieden werden. Weiters können durch den Einsatz von Wasserstoffperoxid als Treibmittel sehr feine, gleichmäßig verteilte Poren gebildet werden. Vorzugsweise werden der Mischung 1 bis 6 Gew% Wasserstoffperoxid zugegeben, bezogen auf das Gewicht des Rezyklats. Um die Dosierung zu vereinfachen, kann Wasserstoffperoxid in Form einer wässrigen Lösung zugegeben werden, wobei die Konzentration des Wasserstoffperoxids in der wässrigen Lösung vorzugsweise im Bereich von 25 bis 40 Gew% liegt, bevorzugter von 33 bis 37 Gew%, besonders bevorzugt bei 35 Gew%. Zur Katalyse des Wasserstoffperoxids kann Braunstein oder ein anderes Peroxid eingesetzt werden.

Bevorzugt wird erfindungsgemäß ein Verhältnis von Rezyklat zu Wasser im Bereich von 85:15 bis 70:30 eingesetzt (Angaben in Gew%), um eine vollständige Umsetzung zu gewährleisten und ein Geopolymer mit hoher Festigkeit und guter Porenstruktur zu erhalten. Der Wassergehalt ist dabei als der gesamte in der Mischung vorhandene Wassergehalt anzusehen (z.B. die Summe des Wassergehalts der wässrigen Lösung des alkalischen Aktivators, des Wassergehalts der Lösung des Treibmittels und des separat zugegebenen Wassers).

Wird der Mischung, die erfindungsgemäß in den Innenbehälter eingefüllt wird, ein Additiv zugegeben, kann dieses aus der Gruppe bestehend aus Tensiden, Dispergiermitteln, Netzmitteln, Stabilisatoren, Komplexbildnern oder einer Mischung davon ausgewählt werden. Auch ein Füllstoff kann der Mischung zur weiteren Verringerung der Schrumpfung zugegeben werden, beispielsweise Perlit, Bimsstein, Vermiculit oder Glasschaum.

Zur erfindungsgemäßen Herstellung eines Geopolymers wird die Mischung erfindungsgemäß in den Innenbehälter des Reaktionsbehälters gefüllt. Nach dem Einfüllen schäumt die Mischung bis zu einer maximalen Schaumhöhe auf. Die maximale Schaumhöhe liegt vorzugsweise im Bereich von drei Fünftel bis fünf Fünftel der Höhe des Innenbehälters, vorzugsweise im Bereich von vier Fünftel bis fünf Fünftel der Höhe des Innenbehälters. Wenn die maximale Schaumhöhe erreicht ist, werden der Innenbehälter und der Außenbehälter hermetisch mit dem Deckel verschlossen, beispielsweise durch Verschrauben oder mittels Schnellspannern. Dabei darf der Reaktionsbehälter, insbesondere der Deckel, keine Undichtigkeit aufweisen, da ansonsten der während der Reaktionen entstehende Wasserdampf entweichen könnte. Dies könnte in weiterer Folge zur Austrocknung der Mischung im oberen, deckelnahen Bereich führen, während die Mischung im unteren, bodennahen Bereich zu feucht werden könnte. Durch dieses Ungleichgewicht des Feuchtigkeitsgehalts könnte es dann zu Spannungsrissbildung kommen.

Erfindungsgemäß wird die Mischung im Innenbehälter auf eine Temperatur im Bereich von 70 bis 100 °C, vorzugsweise 75 bis 85 °C, durch exotherme Reaktionen beheizt. Bei den exothermen Reaktionen handelt es sich um Spaltungsreaktionen der amorphen Bestandteile des Rezyklats (insbesondere des amorphen Siliziumdioxids und des amorphen Aluminiumoxids) und um eine anschließende Polykondensationsreaktion. Dabei wird naturgemäß Wärme freigesetzt, wodurch die Mischung beheizt werden kann. Die exothermen Spaltungsreaktionen werden durch den alkalischen Aktivator initiiert, und es entstehen Monomere wie z.B. Si(OH)₄ und Al(OH)₄¹⁻. Anschließend erfolgt eine Aushärtung unter hydrothermalen Bedingungen, wobei durch die exotherme Polykondensationsreaktion unter Freisetzung von Wasser ein kovalentes, dreidimensionales Netzwerk, d.h. ein Geopolymer (bzw. ein alkaliaktiviertes Material, ein alkaliaktivierter Stoff), gebildet wird. Bestehen die amorphen Bestandteile des Rezyklats aus Siliziumdioxid und Aluminiumoxid, wird ein Alumosilikatnetzwerk gebildet, das sich aus [SiO_{4]}⁴⁻- und [AlO₄]⁵⁻-Tetraedern zusammensetzt, die über Sauerstoffatome miteinander verbunden sind. Die negative Ladung des [AlO₄]⁵⁻-Tetraeders wird dabei durch den Einbau einwertiger Metallkationen, etwa Natrium- oder Kaliumionen, ausgeglichen. Da die Mischung im Innenbehälter somit durch die exothermen Reaktionen (und die dadurch freigesetzte Wärme) aufgeheizt werden kann, kann das erfindungsgemäße Verfahren energieautark durchgeführt werden, d.h. ohne externe Energiezufuhr, was enorme Vorteile hinsichtlich Energieeffizienz und Nachhaltigkeit mit sich bringt.

Gemäß der vorliegenden Erfindung kann die Aufheizung der Mischung in Schritt (d) des erfindungsgemäßen Verfahrens zusätzlich auch durch eine exotherme Energiezufuhr erfolgen. Dann kann das erfindungsgemäße Verfahren in kürzerer Zeitdauer durchgeführt werden. Die externe Energiezufuhr kann für eine Zeitdauer von 10 bis 1.000 min erfolgen. Vorzugsweise erfolgt die externe Energiezufuhr für 5 bis 30 min, um die Reaktionen zu Beginn des Verfahrens zu beschleunigen und somit eine schnellere Aufheizung zu erreichen. Für weitere Spaltungsreaktionen und die Polykondensationsreaktion ist keine weitere externe Energiezufuhr mehr erforderlich. Die durch die exothermen Reaktionen freigesetzte Wärme kann für weitere im Innenbehälter ablaufende Reaktionen genutzt werden. Die Temperatur der Mischung kann dabei auf bis zu 90 °C, oder sogar bis zu 130 °C ansteigen, was in einer Gesamtreaktionsdauer von bis zu 20 h, bevorzugt 8 bis 12 h, resultieren kann. Die tatsächliche Gesamtreaktionsdauer ist unter anderem von der Zusammensetzung des Rezyklats und dessen Dichte abhängig. Durch die exothermen Reaktionen freigesetzte Wärme kann auch für eine anschließende Abtrocknung des synthetisierten porösen Geopolymers verwendet werden. Somit wird durch die vorliegende Erfindung ein ressourcenschonendes Verfahren zur Herstellung eines porösen Geopolymers bereitgestellt.

Erfindungsgemäß kann es während des Verfahrens zu einem Druckanstieg im Innenbehälter gegenüber dem Umgebungsdruck (d.h. atmosphärischen Druck) kommen. Der Druckanstieg ist vorwiegend darauf zurückzuführen, dass während der Polykondensationsreaktion Wasser freigesetzt wird, welches aufgrund der hohen Temperatur im Innenbehälter zu mindestens 90 Gew%, bevorzugter zu mindestens 95 Gew%, besonders bevorzugt zur Gänze als Wasserdampf vorliegen kann. Darüber hinaus können weitere Zerfallsreaktionen von verbliebenem Treibmittel, insbesondere Wasserstoffperoxid, den Druck im Innenbehälter ggf. zusätzlich erhöhen. Aufgrund des Druckanstiegs im Innenbehälter diffundiert Wasserdampf durch die Mischung in Richtung des Bodens des Innenbehälters, einerseits gravitationsbedingt und andererseits deshalb, weil der Boden des Innenbehälters eine Diffusion des Wasserdampfs in den Zwischenraum ermöglicht.

Während des erfindungsgemäßen Verfahrens, insbesondere während der Polykondensationsreaktion unter Freisetzung von Wasserdampf, kann der Druck im Innenbehälter gegenüber dem Umgebungsdruck ansteigen. Dies ermöglicht eine gleichmäßige Versorgung der Mischung mit Feuchtigkeit, indem ein Feuchtegleichgewicht im Luftraum zwischen dem Deckel und der geschäumten Mischung hergestellt wird. Dadurch kann die Polykondensationsreaktion in der gesamten Mischung unter gleichmäßigen Bedingungen ablaufen, sodass ein poröses Geopolymer mit homogenen Eigenschaften, vor allem homogener Festigkeit und Porenstruktur (insbesondere Porengröße, Porenverteilung) erhalten werden kann.

Erfindungsgemäß kann der Druck im Innenbehälter auf bis zu 1180 mbar, bevorzugter auf bis zu 1500 mbar, noch bevorzugter auf bis zu 1800 mbar, besonders bevorzugt auf bis zu 2000 mbar ansteigen. Der Umgebungsdruck (d.h. atmosphärischer Druck) kann dabei 1013 mbar sein. Bei diesem Druck öffnet sich vorzugsweise das Druckventil und bleibt dann geöffnet, um die nachfolgende Abtrocknung des gebildeten porösen Geopolymers einzuleiten. Alternativ kann ein Absinken der Temperatur im Innenbehälter um mindestens 5 °C, oder um mindestens 10 °C, auf ein Ende der Polykondensationsreaktion schließen lassen. Dann öffnet sich das Druckventil vorzugsweise bei dieser Temperatur und bleibt dann geöffnet, um die nachfolgende Abtrocknung des gebildeten porösen Geopolymers einzuleiten. Dadurch können Spannungsrissbildungen (aufgrund Spannungsdifferenzen zwischen dem Kern und der Randzone des porösen Geopolymers, die andernfalls wegen inhomogener Trocknung entstehen würden) sowie Deformation bzw. Zerstörung der gebildeten Poren vermieden werden. Durch die erfindungsgemäß in den exothermen Reaktionen freigesetzte Wärme und die kontrollierte Abführung des Wasserdampfs ist eine Abtrocknung des porösen Geopolymers bis zu einem Restfeuchtegehalt von maximal 15 Gew%, vorzugsweise maximal 10 Gew%, möglich (bezogen auf den anfangs in der Mischung vorhandenen Wassergehalt). Im Vergleich dazu liegt der Restfeuchtegehalt von Geopolymeren bei im Stand der Technik üblichen Herstellungsverfahren im Bereich von 20 bis 30 Gew%. Aufgrund des erfindungsgemäß erzielbaren, geringen Restfeuchtegehalts können Volumensänderungen, die sich an eine nachfolgende Entformung des Geopolymers anschließen, signifikant reduziert werden, wodurch eine damit einhergehende Rissbildung vermieden werden kann. Der Restfeuchtegehalt wird dabei mit einem Feuchtebestimmer des Typs DAB-200-2 (Kern & Sohn GmbH, Deutschland) bestimmt. Dabei werden 50 g der Mischung mittels den gemäß Werkseinstellung definierten Trocknungsparametern für eine Standardtrocknung bei 120 °C mit automatischer Abschaltung getrocknet.

Nach der erfindungsgemäßen Abtrocknung kann das poröse Geopolymer entformt werden, um einen Geopolymerblock zu erhalten. Je nach Geometrie des Innenbehälters kann dieser etwa eine rechteckige oder zylindrische Geometrie aufweisen. Der Geopolymerblock kann anschließend Schritten zur Nachbearbeitung unterzogen werden, beispielsweise kann er zugeschnitten und/oder verpackt werden. Abhängig vom geplanten Einsatzgebiet kann der Geopolymerblock in einem Autoklav auch weiter verfestigt werden, wodurch der Vernetzungsgrad weiter erhöht werden kann.

Der Gesamtenergiebedarf des erfindungsgemäßen Verfahrens zur Herstellung eines porösen Geopolymers beträgt nur rund 1/3 des Energiebedarfs, der zur Herstellung von Porenbeton und Ziegelbaustoffen nach im Stand der Technik üblichen Methoden notwendig ist. Beispielsweise sind anstelle von 2000 MJ/m³ nur 700 MJ/m³ notwendig, um ein poröses Geopolymer mit einer Dichte von 500 kg/m³ herzustellen - dies entspricht einer CO₂-Reduktion von bis zu 70 Gew%.

Die vorliegende offenbarung betrifft weiters ein poröses Geopolymer (auch bezeichnet als poröses, alkaliaktiviertes Material bzw. poröser, alkaliaktivierter Stoff), das durch das erfindungsgemäße Verfahren erhältlich ist, mit einem Restfeuchtegehalt nach dem Entformen von maximal 15 Gew%, vorzugsweise maximal 10 Gew% (ermittelt mit einem Feuchtebestimmer, wie oben angegeben). Vorzugsweise weist das poröse Geopolymer eine geschlossenzellige Struktur mit Poren von 0,1 bis 2,5 mrr Durchmesser auf. Die Poren sind isotrop, woraus richtungsunabhängige Eigenschaften resultieren. Weiters bevorzugt besteht das poröse Geopolymer bis zu 36 Vol%, bevorzugter bis zu 80 Vol% besonders bevorzugt bis zu 93 Vol% aus Luft, sodass es für den Leichtbau prädestiniert ist. Auch kann durch in den Poren eingeschlossene Luft eine gute thermische Isolierfähigkeit erreicht werden. Das poröse Geopolymer kann eine Dichte von 80 bis 1000 kg/m³ aufweisen.

Die vorliegende Offenbarung betrifft auch die Verwendung des porösen Geopolymers als Baumaterial, etwa als feuerfester, schallabsorbierender und/oder wärmedämmender Schaum. Aufgrund des niedrigen Gesamtenergiebedarfs des erfindungsgemäßen Verfahrens, mit welchem das poröse Geopolymer erhältlich ist, kann es als nachhaltiges, ressourcenschonendes Baumaterial eingesetzt werden. Vorzugsweise wird das poröse Geopolymer als Baustein, Bauelement oder Dämmstoff eingesetzt, da die isotrope Porenstruktur aufgrund der richtungsunabhängigen Eigenschaften einen flexiblen Einsatz gegenüber herkömmlichem Porenbeton (in welchem anisotrope Poren vorliegen) ermöglicht. Die Erfindung wird nachstehend anhand von Figurenbeschreibungen bevorzugter Ausführungsformen, auf die sie jedoch nicht beschränkt werden soll, weiter erläutert.

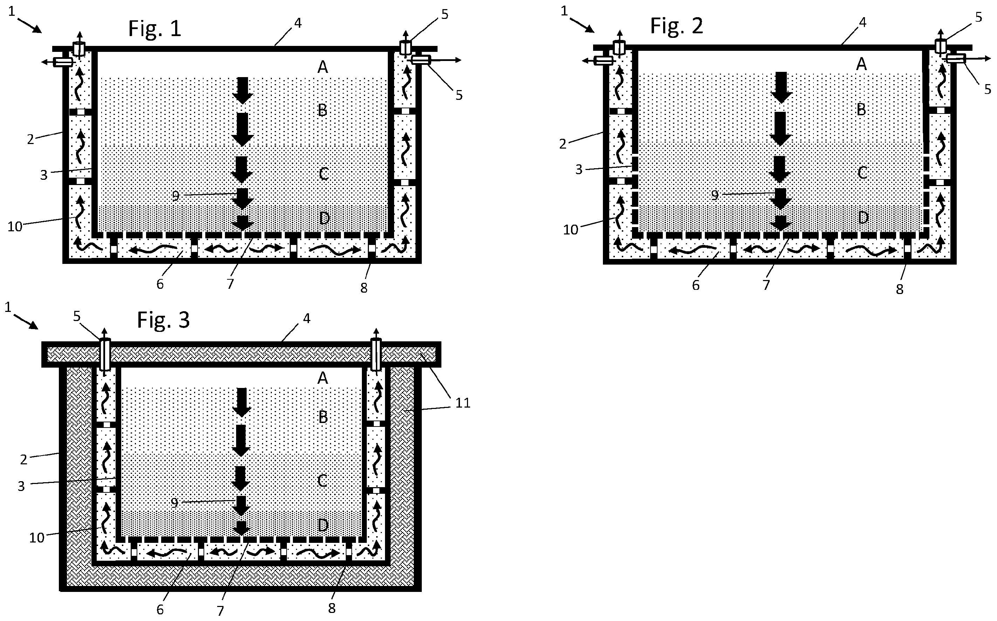

Dabei zeigen Fig. 1-3 Aufrisse erfindungsgemäßer Reaktionsbehälter während einer Abtrocknung eines porösen Geopolymers.

Fig. 1 zeigt einen Reaktionsbehälter 1 gemäß der vorliegenden Erfindung, umfassend einen Außenbehälter 2, einen Innenbehälter 3, einen Deckel 4 und Druckventile 5. Im Innenbehälter 3 befindet sich eine geschäumte Mischung. Zwischen dem Außenbehälter 2 und dem Innenbehälter 3 ist ein Zwischenraum 6 vorgesehen. Ein Boden 7 des Innenbehälters 3 ist perforiert, sodass Wasserdampf durch den Boden 7 diffundieren kann. Im Zwischenraum 6 sind Distanzhalter 8 mit jeweils einer mittig angeordneten Ausnehmung vorgesehen, die normal auf den Boden 7 des Innenbehälters stehen. Die Druckventile 5 sind in einem den Zwischenraum 6 begrenzenden Bereich des Deckels 4 und in einem an den Deckel 4 unmittelbar anschließenden Abschnitt einer Seitenwand des Außenbehälters 2 angeordnet.

Weiters ist aus Fig. 1 ersichtlich, dass Wasserdampf während der erfindungsgemäßen Abtrocknung aufgrund des Druckanstiegs im Innenbehälter 3 in Richtung des Bodens 7 des Innenbehälters 3 diffundiert (angedeutet durch Pfeile 9), sodass sich Zonen A-D mit unterschiedlichem Feuchtigkeitsgehalt ausbilden, wobei Zone A den niedrigsten Feuchtigkeitsgehalt im Innenbehälter 3 aufweist und Zone D den höchsten. Insbesondere ist es mit der vorliegenden Erfindung möglich, ein Feuchtegleichgewicht in Zone A (Luftraum zwischen dem Deckel 4 und der geschäumten Mischung) herzustellen. Nachdem der Wasserdampf durch den perforierten Boden 7 des Innenbehälters 3 in den Zwischenraum 6 diffundiert ist, strömt er in Richtung der Druckventile 5 (angedeutet durch Pfeile 10), über die er abgeführt wird.

Fig. 2 zeigt einen weiteren erfindungsgemäßen Reaktionsbehälter 1. Der Aufbau entspricht im Wesentlichen dem Aufbau des Reaktionsbehälters 1 der Fig. 1, mit der Ausnahme, dass auch Abschnitte von Seitenwänden des Innenbehälters 3, die sich an einen Boden 7 des Innenbehälters 3 anschließen, perforiert sind.

In Fig. 3 wird ein weiterer Reaktionsbehälter 1 gemäß der vorliegenden Erfindung gezeigt, dessen Aufbau im Wesentlichen dem Aufbau des Reaktionsbehälters 1 der Fig. 1 entspricht, mit der Ausnahme, dass der Außenbehälter 2 und der Deckel 4 eine Wärmeisolierung 11 beinhalten. Auch sind Druckventile 5 nur in einem den Zwischenraum 6 begrenzenden Bereich des Deckels 4 vorgesehen.

## Patentansprüche

1. Reaktionsbehälter (1) zur Herstellung eines porösen Geopolymers, umfassend einen Außenbehälter (2) mit einem Boden, einen Innenbehälter (3) mit einem Boden (7), einen Distanzhalter (8), ein Druckventil (5), einen durch den Distanzhalter (8) zwischen Außenbehälter (2) und Innenbehälter (3) ausgebildeten Zwischenraum (6) und einen Deckel (4) zum hermetischen Verschließen des Außenbehälters (2) und des Innenbehälters (3), wobei der Boden (7) des Innenbehälters (2) diffusionsoffen ist und eine Barriere für Flüssigkeiten bildet, und wobei das Druckventil (5) eingerichtet ist, Druck und Wasserdampf aus dem Zwischenraum (6) abzuführen.

2. Reaktionsbehälter (1) nach Anspruch 1, **dadurch gekennzeichnet, dass** der Boden (7) des Innenbehälters (3) perforiert ist.

3. Reaktionsbehälter (1) nach Anspruch 2, **dadurch gekennzeichnet, dass** der Boden (7) des Innenbehälters (3) mit einem Vlies, vorzugsweise einem Glasvlies oder Basaltvlies, oder mit einer Membran, vorzugsweise bestehend aus gerecktem Polyethylenterephthalat (PTFE), bedeckt ist.

4. Reaktionsbehälter (1) nach einem der Ansprüche 1 bis 3, **dadurch gekennzeichnet, dass** ein an den Boden (7) des Innenbehälters (3) anschließender Abschnitt einer Seitenwand des Innenbehälters (3) diffusionsoffen ist und eine Barriere für Flüssigkeiten bildet.

5. Reaktionsbehälter (1) nach einem der Ansprüche 1 bis 4, **dadurch gekennzeichnet, dass** ein Bodenbereich des Zwischenraums (6) so ausgebildet ist, dass er 10 bis 95 Gew%, vorzugsweise mindestens 70 Gew%, einer im Innenbehälter (3) vorhandenen Menge an Wasser aufnehmen kann.

6. Reaktionsbehälter (1) nach einem der Ansprüche 1 bis 5, **dadurch gekennzeichnet, dass** das Druckventil (5) so ausgerichtet ist, dass es sich bei einem vorbestimmten Wert des Drucks im Innenbehälter (3) öffnet und dann geöffnet bleibt.

7. Reaktionsbehälter (1) nach Anspruch 6, **dadurch gekennzeichnet, dass** der vorbestimmte Wert des Drucks im Innenbehälter (3) mindestens 1180 mbar ist.

8. Reaktionsbehälter (1) nach einem der Ansprüche 1 bis 7, **dadurch gekennzeichnet, dass** das Druckventil (5) in einem den Zwischenraum (6) begrenzenden Bereich des Deckels (4) oder in einem an den Deckel (4) unmittelbar anschließenden Abschnitt einer Seitenwand des Außenbehälters (2) vorgesehen ist.

9. Reaktionsbehälter (1) nach einem der Ansprüche 1 bis 8, **dadurch gekennzeichnet, dass** der Reaktionsbehälter (1) zumindest zwei Druckventile (5) umfasst, vorzugsweise vier.

10. Reaktionsbehälter (1) nach einem der Ansprüche 1 bis 9, **dadurch gekennzeichnet, dass** der Außenbehälter (2) und der Deckel (4) eine Wärmeisolierung (11) beinhalten.

11. Verfahren zur Herstellung eines porösen Geopolymers, umfassend die Schritte:
(a) Bereitstellen eines Reaktionsbehälters (1) nach einem der Ansprüche 1 bis 10,
(b) Befüllen des Innenbehälters (3) mit einer Mischung umfassend zerkleinertes Rezyklat, einen alkalischen Aktivator, Treibmittel und Wasser, wobei das Rezyklat Siliziumdioxid und Aluminiumoxid beinhaltet,
(c) Schäumen der Mischung bis zu einer maximalen Schaumhöhe und hermetisches Verschließen des Innenbehälters (3) und des Außenbehälters (2) mit dem Deckel (4),
(d) Initiieren von exothermen Spaltungsreaktionen amorpher Bestandteile des Rezyklats mit dem alkalischen Aktivator, und Aufheizen der Mischung auf eine Temperatur im Bereich von 70 bis 100 °C durch die Spaltungsreaktionen,
(e) Ausbilden des porösen Geopolymers durch weitere Spaltungsreaktionen und eine Polykondensationsreaktion unter Freisetzung von Wasserdampf,
(f) Abtrocknen des porösen Geopolymers durch Abführen des freigesetzten Wasserdampfs in den Zwischenraum (6) und über das Druckventil (5) aus dem Reaktionsbehälter (1), und
(g) Entformen des porösen Geopolymers.

12. Verfahren nach Anspruch 11, **dadurch gekennzeichnet, dass** das Verhältnis von Siliziumdioxid zu Aluminiumoxid im Rezyklat im Bereich von 15:8 bis 60:30 liegt (Angaben in Gew%).

13. Verfahren nach Anspruch 11 oder 12, **dadurch gekennzeichnet, dass** das Verhältnis von Rezyklat zu Wasser in der Mischung im Bereich von 85:15 bis 70:30 liegt (Angaben in Gew%).

## Claims

1. Reaction vessel (1) for producing a porous geopolymer, comprising an outer vessel (2) with a bottom, an inner vessel (3) with a bottom (7), a spacer (8), a pressure valve (5), an interspace (6) formed by the spacer (8) between the outer vessel (2) and inner vessel (3), and a lid (4) for hermetically sealing the outer vessel (2) and the inner vessel (3), wherein the bottom (7) of the inner vessel (2) is diffusion-permeable and forms a barrier for liquids, and wherein the pressure valve (5) is arranged to discharge pressure and water vapor from the interspace (6).

2. Reaction vessel (1) according to claim 1, **characterized in that** the bottom (7) of the inner vessel (3) is perforated.

3. Reaction vessel (1) according to claim 2, **characterized in that** the bottom (7) of the inner vessel (3) is covered with a fleece, preferably a glass fleece or basalt fleece, or with a membrane, preferably consisting of stretched polyethylene terephthalate (PTFE).

4. Reaction vessel (1) according to any one of claims 1 to 3, **characterized in that** a section of a side wall of the inner vessel (3) adjoining the bottom (7) of the inner vessel (3) is diffusion-permeable and forms a barrier for liquids.

5. Reaction vessel (1) according to any one of claims 1 to 4, **characterized in that** a bottom region of the interspace (6) is formed such that it can accommodate 10 to 95 wt%, preferably at least 70 wt%, of an amount of water present in the inner vessel (3).

6. Reaction vessel (1) according to any one of claims 1 to 5, **characterized in that** the pressure valve (5) is configured such that it opens at a predetermined value of pressure in the inner vessel (3) and then remains open.

7. Reaction vessel (1) according to claim 6, **characterized in that** the predetermined value of pressure in the inner vessel (3) is at least 1180 mbar.

8. Reaction vessel (1) according to any one of claims 1 to 7, **characterized in that** the pressure valve (5) is provided in a region of the lid (4) delimiting the interspace (6) or in a section of a side wall of the outer vessel (2) directly adjoining the lid (4).

9. Reaction vessel (1) according to any one of claims 1 to 8, **characterized in that** the reaction vessel (1) comprises at least two pressure valves (5), preferably four.

10. Reaction vessel (1) according to any one of claims 1 to 9, **characterized in that** the outer vessel (2) and the lid (4) include thermal insulation (11).

11. Method for producing a porous geopolymer, comprising the steps:
(a) providing a reaction vessel (1) according to any one of claims 1 to 10,
(b) filling the inner vessel (3) with a mixture comprising comminuted recyclate, an alkaline activator, blowing agent and water, wherein the recyclate includes silicon dioxide and aluminum oxide,
(c) foaming the mixture up to a maximum foam height and hermetically sealing the inner vessel (3) and the outer vessel (2) with the lid (4),
(d) initiating exothermic cleavage reactions of amorphous components of the recyclate with the alkaline activator, and heating the mixture to a temperature in the range of 70 to 100°C by means of the cleavage reactions,
(e) forming the porous geopolymer through further cleavage reactions and a polycondensation reaction with release of water vapor,
(f) drying the porous geopolymer by discharging the released water vapor into the interspace (6) and via the pressure valve (5) from the reaction vessel (1), and
(g) demolding the porous geopolymer.

12. Method according to claim 11, **characterized in that** the ratio of silicon dioxide to aluminum oxide in the recyclate is in the range of 15:8 to 60:30 (data in wt%).

13. Method according to claim 11 or 12, **characterized in that** the ratio of recyclate to water in the mixture is in the range of 85:15 to 70:30 (data in wt%).

## Revendications

1. Réacteur (1) pour la fabrication d'un géopolymère poreux, comprenant un récipient extérieur (2) avec un fond, un récipient intérieur (3) avec un fond (7), un espaceur (8), une soupape de pression (5), un espace intermédiaire (6) formé par l'espaceur (8) entre le récipient extérieur (2) et le récipient intérieur (3), et un couvercle (4) pour fermer hermétiquement le récipient extérieur (2) et le récipient intérieur (3), le fond (7) du récipient intérieur (2) étant perméable à la diffusion tout en constituant une barrière pour les liquides, et la soupape de pression (5) étant configurée pour évacuer la pression et la vapeur d'eau de l'espace intermédiaire (6).

2. Réacteur (1) selon la revendication 1, **caractérisé en ce que** le fond (7) du récipient intérieur (3) est perforé.

3. Réacteur (1) selon la revendication 2, **caractérisé en ce que** le fond (7) du récipient intérieur (3) est recouvert d'un non-tissé, de préférence un non-tissé de verre ou un non-tissé de basalte, ou d'une membrane, de préférence constituée de polyethylene terephthalate (PTFE) expansé.

4. Réacteur (1) selon l'une quelconque des revendications 1 à 3, **caractérisé en ce qu'**une section d'une paroi latérale du récipient intérieur (3) adjacente au fond (7) du récipient intérieur (3) est perméableà la diffusion et forme une barrière pour les liquides.

5. Réacteur (1) selon l'une quelconque des revendications 1 à 4, **caractérisé en ce qu'**une zone de fond de l'espace intermédiaire (6) est configurée pour pouvoir recevoir 10 à 95% en poids, de préférence au moins 70% en poids, d'une quantité d'eau présente dans le récipient intérieur (3).

6. Réacteur (1) selon l'une quelconque des revendications 1 à 5, **caractérisé en ce que** la soupape de pression (5) est configurée de manière à s'ouvrir à une valeur prédéterminée de la pression dans le récipient intérieur (3) et à rester ensuite ouverte.

7. Réacteur (1) selon la revendication 6, **caractérisé en ce que** la valeur prédéterminée de la pression dans le récipient intérieur (3) est d'au moins 1180 mbar.

8. Réacteur (1) selon l'une quelconque des revendications 1 à 7, **caractérisé en ce que** la soupape de pression (5) est prévue dans une zone du couvercle (4) délimitant l'espace intermédiaire (6) ou dans une section d'une paroi latérale du récipient extérieur (2) directement adjacente au couvercle (4).

9. Réacteur (1) selon l'une quelconque des revendications 1 à 8, **caractérisé en ce que** le réacteur (1) comprend au moins deux soupapes de pression (5), de préférence quatre.

10. Réacteur (1) selon l'une quelconque des revendications 1 à 9, **caractérisé en ce que** le récipient extérieur (2) et le couvercle (4) comprennent une isolation thermique (11).

11. Procédé de fabrication d'un géopolymère poreux, comprenant les étapes suivantes :
(a) fournir un réacteur (1) selon l'une quelconque des revendications 1 à 10,
(b) remplir le récipient intérieur (3) d'un mélange comprenant un recyclat broyé, un activateur alcalin, un agent d'expansion et de l'eau, le recyclat contenant de la silice et de l'oxyde d'aluminium,
(c) faire mousser le mélange jusqu'à atteindre une hauteur de mousse maximale et fermer hermétiquement le récipient intérieur (3) et le récipient extérieur (2) avec le couvercle (4),
(d) initier des réactions de clivage exothermiques des composants amorphes du recyclat avec l'activateur alcalin, et chauffer le mélange à une température comprise entre 70 et 100°C sous l'effet des réactions de clivage,
(e) former le géopolymère poreux par des réactions de clivage supplémentaires et une réaction de polycondensation avec libération de vapeur d'eau,
(f) sécher le géopolymère poreux en évacuant la vapeur d'eau libérée dans l'espace intermédiaire (6) et à l'extérieur du réacteur (1) via la soupape de pression (5), et
(g) démouler le géopolymère poreux.

12. Procédé selon la revendication 11, **caractérisé en ce que** le rapport de la silice à l'oxyde d'aluminium dans le recyclat est compris entre 15:8 et 60:30 (indications en % en poids).

13. Procédé selon la revendication 11 ou 12, **caractérisé en ce que** le rapport du recyclat à l'eau dans le mélange est compris entre 85:15 et 70:30 (indications en % en poids).
